# EUROPÄISCHE PATENTSCHRIFT

(11) **EP 0 638 293 B1**
(45) Veröffentlichungstag und Bekanntmachung des Hinweises auf die Patenterteilung: **29.04.1998**
(21) Anmeldenummer: 94111876.2
(22) Anmeldetag: 09.06.1993
(51) Int. Cl.: A61C 8/00, A61C 13/235

(54) **Vorrichtung zum Positionieren eines Magneten in einer Prothese**
Device for positioning a magnet in a prosthesis
Dispositif pour positionner un aimant dans une prothèse

(30) Priorität: 12.06.1992 DE 9207951 U
(43) Veröffentlichungstag der Anmeldung: 15.02.1995
(62) Teilanmeldung aus: 93109277.9
(73) Patentinhaber: Stemmann, Hartmut, D-22529 Hamburg (DE)
(72) Erfinder: Stemmann, Hartmut, D-22529 Hamburg (DE)
(74) Vertreter: Klingseisen, Franz, Dipl.-Ing.

(56) Entgegenhaltungen:
- DE-U- 9 207 951
- US-A- 4 302 189

## Beschreibung

Die Erfindung betrifft eine Vorrichtung zum Positionieren eines Magneten in einer Prothese.

Der Erfindung liegt die Aufgabe zugrunde, eine Vorrichtung vorzuschlagen, mittels der ein in einer Zahnprothese anzubringender Magnet exakt und genau in Ausrichtung auf einen bereits implantierten Magneten positioniert werden kann.

Vorteilhafte Ausgestaltungen der Erfindungen sind in der nachfolgenden Beschreibung und in den Ansprüchen angegeben.

Dokument US-A-4 302 189 offenbart die Befestigung eines ellagneten in einer Prothese mit kaltpolymerisierendem Akrylharz, ohne die Zwischenschaltung eines hülsenförmigen Elementes.

Beispielsweise Ausführungsformen der Erfindung werden nachfolgend anhand der Zeichnung näher erläutert.

Es zeigen:
- Fig. 1: in einem Längsschnitt zwei aneinanderliegende zylindrische Magnete,
- Fig. 2: im Schnitt die beiden Magneten in Verbindung mit der Positioniervorrichtung, und
- Fig. 3: die Positioniervorrichtung im Schnitt.

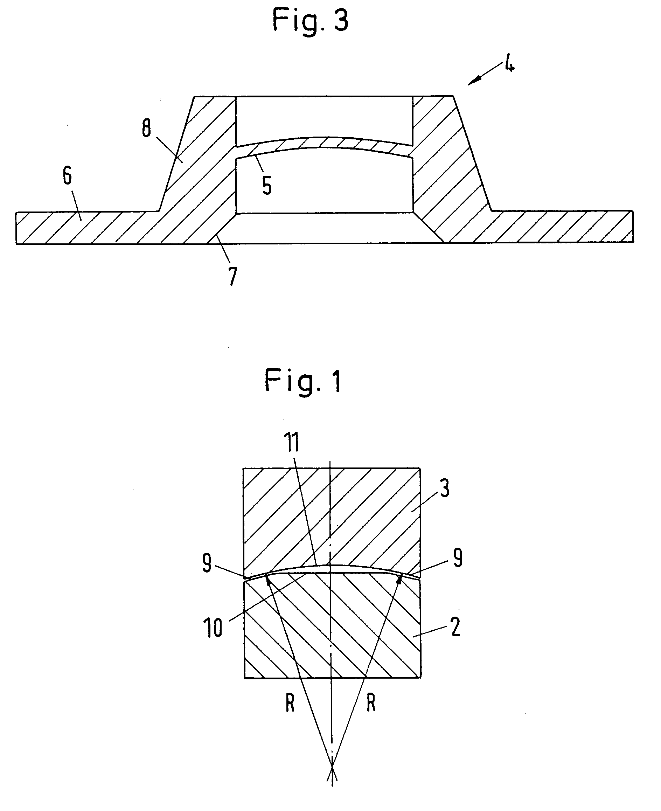

Fig. 1 zeigt im Längsschnitt einen zylindrischen Magneten 2, der implantiert oder an einem Implantat befestigt wird, und einen gegenüberliegenden zylindrischen Magneten 3, der in einer nicht dargestellten Prothese befestigt wird. Die zur Längsachse des zylindrischen Magneten 2 senkrecht liegende Stirnfläche 10 ist im Randbereich 9 derart abgerundet, daß sich eine konvexe Kugelringfläche 9 mit einem Radius R ausgehend von der Achse des zylindrischen Magneten ergibt.

Die gegenüberliegende Stirnfläche 11 des Magneten 3 ist durchgehend konkav ausgebildet mit dem gleichen Kugelradius R, so daß die beiden aneinanderliegenden Magneten 2 und 3 nur im Randbereich 9 aufeinander liegen, während im Mittelbereich der ebenen Stirnfläche 10 ein Abstand zwischen den gegenüberliegenden Flächen vorhanden ist. Auf diese Weise wird ein Druckpunkt in der Mitte des Magneten beim Tragen der Prothese vermieden, und es ergibt sich eine Selbstzentrierwirkung der aufeinander liegenden Magneten 2 und 3, wenn der in der Prothese angeordnete Magnet 3 gegenüber dem implantierten Magneten 2 durch Verschiebebewegungen der Prothese ausgelenkt wird.

Es ist auch möglich, an dem implantierten Magneten 2 eine durchgehend konvexe Kugelfläche 9, 10 vorzusehen, jedoch wird bei einer Auslenkbewegung des Magneten 3 dieser dadurch stärker von dem Magneten 2 abgehoben, wenn z. B. der Magnet 3 quer zur Achse der Anordnung verschoben wird. Durch die Abflachung bei 10 wird der Magnet 3 nicht so stark abgehoben, wenn er quer zur Achse bewegt wird.

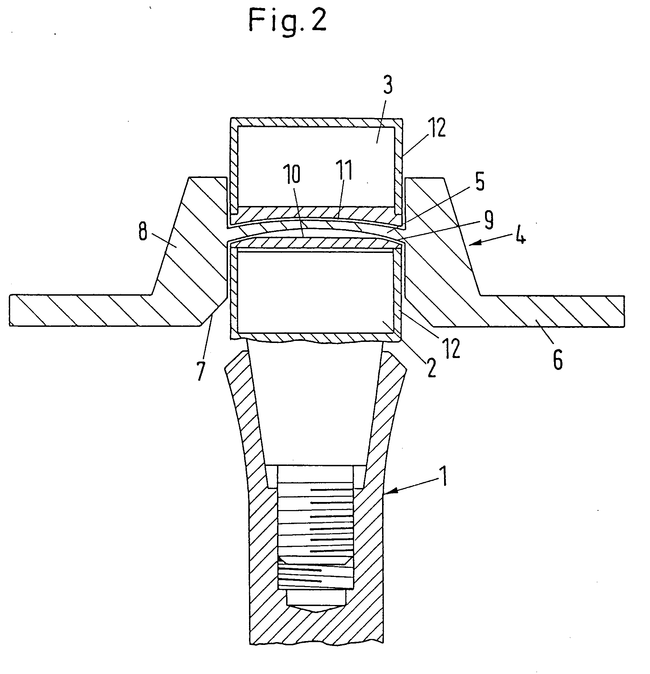

Fig. 2 zeigt eine Magnetanordnung mit jeweils in einer Ummantelung 12 eingeschweißten Magneten 2 und 3, wobei die konkave Fläche 11 und die Kugelringfläche 9 an den gegenüberliegenden Flächen der jeweiligen Ummantelung 12 ausgebildet sind. Bei 1 ist der Kopfteil eines Dental-Implantates schematisch angedeutet, in das der zylindrische Magnet 2 mit Ummantelung 12 eingesetzt ist. Zur Erleichterung der genauen Positionierung des Magneten 3 in einer nicht dargestellten Zahnprothese ist ein hülsenförmiges Element 4 aus einem im medizinischen Bereich zugelassenen Weich-Silikon vorgesehen. Das hülsenförmige Element 4 mit dem Hülsenkörper 8 hat im unteren Abschnitt einen Innendurchmesser entsprechend dem Außendurchmesser des implantierten Magneten 2, 12, so daß der Hülsenkörper 8 aufgesteckt werden kann. Auf dem Innenumfang ist der Hülsenkörper 8 mit einer Trennwand 5 von vorbestimmter Dickenabmessung versehen, die einerseits die Eintauchtiefe des implantierten Magneten 2, 12 in den Hülsenkörper 8 begrenzt und andererseits als Distanzhalter für den von oben in den Hülsenkörper 8 eingesteckten Magneten 3, 12 dient. Der obere Abschnitt des Hülsenkörpers 8 hat deshalb einen Innendurchmesser entsprechend dem Außendurchmesser des Magneten 3, 12. Die Trennwand 5 ergibt einen definierten Luftspalt zwischen den Magneten, der die unterschiedliche Nachgiebigkeit der Kieferschleimhaut bei durch Kaubewegungen auftretender Belastung durch die Zahnprothese ausgleicht.

Der Hülsenkörper 8 hat im oberen Bereich eine Wandstärke von etwa 1 mm, die sich nach unten auf etwa 2 mm vergrößert, so daß sich ein kegelstumpfförmiger Außenumfang des Hülsenkörpers 8 ergibt. Vom unteren Rand des Hülsenkörpers 8 erstreckt sich ein Abdeckflansch 6 radial nach außen. Er kann beispielsweise einen Außendurchmesser von etwa 16 mm haben. Dieser Flansch 6 dient zur Abdeckung der Schleimhaut, und er kann vom Zahnarzt entsprechend den jeweiligen Kieferverhältnissen durch Beschneiden angepaßt werden. Zum leichteren Aufstecken des Elementes 4 auf den implantierten Magneten 2, 12 ist die untere Öffnung des Hülsenkörpers 8 bei 7 abgeschrägt.

Beim Anbringen der Magnethalterung wird zunächst der untere Magnet 2, 12 in das Implantat eingeschraubt, worauf das Element 4 aus Weich-Silikon auf den Magneten 2, 12 aufgesteckt wird. Der Flansch 6 deckt die Schleimhaut ab und der dickere untere Abschnitt des Hülsenkörpers 8 umschließt den Magneten 2, 12 fest. Die Trennwand 5 liegt vor allem auf der Kugelringfläche 9 auf. Zu diesem Zweck ist die Trennwand 5 etwas nach oben gewölbt am Hülsenkörper angeformt, wie Fig. 3 zeigt. Hierauf wird der obere Magnet 3 bis zum Anschlag an der Trennwand 5 eingedrückt. Der Abstand zwischen oberem Rand des Hülsenkörpers 8 und der Trennwand 5 ist so ausgelegt, daß der Magnet 3, 12 um einen vorgegebenen Betrag von beispielsweise 1,5 mm aus dem Hülsenkörper 8 herausragt. Mit dieser freiliegenden Retentionsfläche wird der obere Magnet 3, 12 in die vorgefertigte Aussparung der nicht dargestellten Zahnprothese eingesetzt. Hierauf wird mittels flüssigem Autopolymerisat der Magnet 3, 12 in die Prothese einpolymerisiert. Der Hülsenkörper 8 mit Abdeckflansch 6 und Trennwand 5 verhindert, daß das flüssige Autopolymerisat den Magneten 2, 12 und das Implantat benetzt.

Nach dem Aushärten des Polymerisats wird das Element 4 abgenommen. Durch die Kegelform des Hülsenkörpers 8 ergibt sich ein vorbestimmter Hohlraum zwischen Zahnprothesenbasis und dem Implantatoberteil bzw. Magneten 2, 12, der in die Mundhöhle hineinragt, so daß bei einer Verschiebebewegung der Prothese quer zur Längsachse die Prothesenbasis sich nicht am Magneten 2, 12 abstützen kann. Auf diese Weise wird eine Beschädigung der Prothese verhindert, und es werden unerwünschte, auf das Implantat schädlich wirkende horizontale Schubkräfte von der Prothese nicht auf das fest im Knochen verankerte Implantat übertragen.

Die gesamte Höhe des Elementes 4 bei dem dargestellten Ausführungsbeispiel kann beispielsweise 3,7 mm betragen. Der Innendurchmesser beträgt 4,4 mm. Die Trennwand 5 kann mit unterschiedlicher Stärke ausgelegt sein, damit der Luftspalt zwischen den Magneten an unterschiedliche Nachgiebigkeiten der Mundschleimhaut angepaßt werden kann. Es ist auch eine Ausführungsform möglich, bei der die Trennwand 5 entfällt, beispielsweise bei einer endständigen Zahnkrone. In diesem Falle könnten die beiden Magnete direkt aufeinander liegen, wie Fig. 1 zeigt, wobei sie durch den Hülsenkörper 8 zueinander zentriert werden.

Anstelle der Trennwand 5 können auch radial nach innen ragende Laschen als Distanzhalter an den Hülsenkörper 8 angeformt sein. Vorzugsweise wird eine geschlossene Trennwand 5 vorgesehen, um ein Eindringen von flüssigem Polymerisat zu verhindern.

Das Element 4 kann nicht nur zum Zentrieren der Magnetanordnung nach Fig. 1 verwendet werden, sondern auch für andere Magnetpaarungen, bei denen die beiden Magneten über eine senkrecht zur Längsachse verlaufende ebene Stirnseite einander gegenüberliegen.

## Patentansprüche

1. Vorrichtung zum Positionieren eines in einer Prothese, insbesondere Zahnprothese, anzubringenden Magneten relativ zu einem implantierten Magneten,
gekennzeichnet durch ein auf den implantierten oder an einem Implantat befestigten Magneten (2) aufsteckbares, hülsenförmiges Element (4), in das der in der Prothese zu positionierende Magnet (3) einsteckbar ist.

2. Vorrichtung nach Anspruch 1,
dadurch gekennzeichnet,
daß auf den Innumfang des hülsenförmigen Elementes (4) eine Trennwand (5) ausgebildet. ist, welche die beiden Magneten (2,3) in einem vorbestimmten Abstand voneinander hält.

3. Vorrichtung nach Anspruch 1,
dadurch gekennzeichnet,
daß das Element (4) einen kegelstumpfförmigen Hülsenkörper (8) aufweist.

4. Vorrichtung nach Anspruch 1,
dadurch gekennzeichnet,
daß sich vom unteren Rand des Elementes (4) radial nach außen ein Abdeckflansch (6) erstreckt.

5. Vorrichtung nach Anspruch 1,
dadurch gekennzeichnet,
daß das Element (4) aus einem körperverträglichen Weich-Silikon besteht.

## Claims

1. Device for positioning a magnet to be placed in a prosthesis, especially a tooth prosthesis, relative to an implanted magnet,
**characterized by** a sleeve-shaped element (4) which can be attached to the implanted magnet (2) or to a magnet (2) fixed on an implant, into which element (4) the magnet (3) to be positioned in the prosthesis can be inserted.

2. Device according to claim 1,
**characterized in that**
on the inner circumference of the sleeve-shaped element (4) a partition wall (5) is formed, which maintains the two magnets (2,3) at a predetermined distance from one another.

3. Device according to claim 1,
**characterized in that**
the element (4) is provided with a cone-frustrum shaped sleeve body (8).

4. Device according to claim 1,
**characterized in that**
a covering flange (6) extends radially outwards from the lower edge of the element (4).

5. Device according to claim 1,
**characterized in that**
the element (4) consists of a soft silicon which is suitable for the human body.

## Revendications

1. Dispositif pour positionner un aimant devant être placé dans une prothèse, notamment une prothèse dentaire, vis-à-vis d'un aimant implanté,
caractérisé par un élément (4) en forme de douille qui peut être emboîté sur l'aimant (2) implanté ou fixé à un implant, élément dans lequel peut être emboîté l'aimant (3) devant être positionné dans la prothèse.

2. Dispositif selon la revendication 1,
caractérisé par le fait
qu'une cloison séparatrice (5), ménagée sur le pourtour intérieur de l'élément (4) en forme de douille, maintient les deux aimants (2, 3) à une distance prédéterminée l'un de l'autre.

3. Dispositif selon la revendication 1,
caractérisé par le fait
que l'élément (4) présente un corps de douille tronconique (8).

4. Dispositif selon la revendication 1,
caractérisé par le fait
qu'une aile de recouvrement (6) s'étend radialement vers l'extérieur à partir du bord inférieur de l'élément (4).

5. Dispositif selon la revendication 1,
caractérisé par le fait
que l'élément (4) est constitué d'un silicone tendre compatible avec le corps humain.
